# EUROPÄISCHE PATENTSCHRIFT

(11) **EP 1 541 411 B1**
(45) Veröffentlichungstag und Bekanntmachung des Hinweises auf die Patenterteilung: **18.04.2012**
(21) Anmeldenummer: 04025500.2
(22) Anmeldetag: 27.10.2004
(51) Int. Cl.: B60N 3/02, B60R 21/055

(54) **Halteteil für ein Fahrzeug, insbesondere für ein Kraftfahrzeug**
Holding element for a vehicle, in particular for a motor vehicle
Elément de maintien pour véhicule, notamment de véhicule automobile

(30) Priorität: 12.12.2003 DE 10358118; 26.03.2004 DE 102004015961
(43) Veröffentlichungstag der Anmeldung: 15.06.2005
(73) Patentinhaber: Volkswagen Aktiengesellschaft, 38436 Wolfsburg (DE)
(72) Erfinder: Stasch, Thomas, 38448 Wolfsburg (DE); Karg, Horst, 38442 Wolfsburg (DE)
(74) Vertreter: Liebl, Thomas

(56) Entgegenhaltungen:
- DE-A1- 10 022 111
- DE-A1- 10 140 338
- DE-A1- 19 651 092

## Beschreibung

Die Erfindung betrifft ein Halteteil für ein Fahrzeug, insbesondere für ein Kraftfahrzeug, nach dem Oberbegriff des Anspruchs 1.

Aus der DE 100 22 111 A ist ein gattungsgemäßes Halteteil bekannt, das ein Wandteil und ein Montageteil aufweist. Das Montageteil ist über einen schaumstoffartigen Körper am Fahrzeugdach elastisch abstützbar. Aufgrund der Elastizität des schaumstoffartigen Körpers ist das Montageteil federnd wieder in seine Ursprungslage rückführbar, ohne dass eine bleibende Deformation erfolgen würde.

Bei einem aus der DE 101 40 338 A1 bekannten Halteteil für ein Kraftfahrzeug ist dieses wenigstens zweiteilig aus wenigstens einem Wandteil und wenigstens einem Montageteil gebildet. Das Montageteil liegt mit einem Montageteil-Randbereich in einer Anlageverbindung in einem Wandteil-Randbereich des Wandteils zur wenigstens bereichsweisen Ausbildung eines Überlappungsbereichs an. Das Wandteil ist im montierten Zustand mit einem Wandteil-Befestigungsbereich unmittelbar oder mittelbar an einer Fahrzeuginnenwand befestigbar. Am Montageteil ist wenigstens ein Funktionsteil, vorzugsweise ein Haltegriff, montierbar, wobei das Funktionsteil wenigstens mit einer Zugkraft belastbar ist.

Aus der DE 202 09 141 U ist ein Halteteil mit einem Dachhaltegriff bekannt. Das Halteteil ist ein einteiliges Aufnahmeblech, das deformierbar ausgebildet ist und unmittelbar an die Karosseriestruktur angeschweißt ist.

Konkret ist das Halteteil dabei so ausgeführt, dass sich im Querschnitt gesehen eine U-Form ergibt. Der aus Montageteil-Randbereich und Wandteil-Randbereich gebildete Überlappungsbereich bildet dabei die U-Basis aus und der Wandteil-Befestigungsbereich bildet einen U-Schenkel. Der zweite U-Schenkel wird durch einen Teilbereich des Montageteils gebildet, an dem ein Dachhaltegriff angeschraubt werden kann. Insgesamt ist das Halteteil dabei so an der Fahrzeuginnenwand montiert, dass die U-Form in Fahrzeughochrichtung gesehen nach unten offen ist.

Aufgabe der Erfindung ist es, ein alternatives Halteteil zu schaffen, bei dem mit einfachem Aufbau eine gute Funktionalität gegeben ist.

Diese Aufgabe wird mit den Merkmalen des Anspruchs 1 gelöst.

Gemäß Anspruch 1 ist am Montageteil ein sich an den Montageteil-Randbereich anschließender Montageteil-Überstand, an dem ein Haltegriff oder kleiderhaken montiert ist, ausgebildet. Das Montageteil und das Wandteil sind im Überlappungsbereich an wenigstens einer Verbindungsstelle miteinander verbunden. Bei einer Zugkraftbelastung am Haltegriff oder kleiderhaken erfolgt eine Abstützung des Montageteils am Wandteil im Überlappungsbereich. Bei einer der Zugkraftbelastung in etwa entgegengesetzt ausgerichteten Druckkraftbelastung hebt das Montageteil unter Beibehaltung der Verbindung an der wenigstens einen Verbindungsstelle vom Wandteil im Überlappungsbereich ab.

Vorteilhaft bei dieser Ausführung des Halteteils ist, dass das Montageteil im montierten Zustand mit dem Montageteil-Randbereich unter Ausbildung des Überlappungsbereichs auf dem Wandteil-Randbereich aufliegt. Dadurch stützt sich das Montageteil bei einer Zugkraftbelastung am Haltegriff oder kleiderhaken, der am Montageteil-Überstand montiert ist, am Wandteil, insbesondere am Wandteil-Randbereich ab, so dass eine Einleitung der Kräfte über das Halteteil in die Fahrzeugkarosserie bei unverformten Halteteil stattfinden kann. Bei einer der Zugkraftbelastung in etwa entgegengesetzt ausgerichteten Druckkraftbelastung hebt das Montageteil im Überlappungsbereich vom Wandteil ab. Die Verbindungsstelle bleibt dabei dauerhaft bestehen. Für einen Dachhaltegriff ist das Halteteil beispielsweise so ausgeführt, dass für eine gute Bedienbarkeit des Dachhaltegriffs dieser etwas in den Fahrzeuginnenraum wegragt. Im Falle einer Kollision besteht somit die Gefahr, dass ein auf einem dem Dachhaltegriff zugeordneten Fahrzeugsitz sitzender Fahrzeuginsasse aufgrund der durch die Kollision auf ihn einwirkenden Kräfte in Richtung Dachhaltegriff verlagert werden könnte. Kommt es zu einem Kontakt zwischen dem Fahrzeuginsassen und dem Dachhaltegriff, so ist aufgrund der Zweiteiligkeit des Halteteils und des entsprechend ausgebildeten Überlappungsbereiches zwischen den beiden Einzelbauteilen ein gutes Deformationsverhalten des Halteteils gegeben, so dass der Dachhaltegriff in Richtung Fahrzeugaußenseite weggebogen werden kann. Dadurch kann das Verletzungsrisiko bei einem etwaigen Kontakt zwischen Fahrzeuginsassen und Dachhaltegriff vorteilhaft gesenkt werden. Die Auslegung Auslegung des Überlappungsbereiches zwischen dem Wandteil und dem Montageteil erfolgt derart, dass bei einer Druckkraftbelastung, die in etwa entgegen der Zugkraftbelastung ausgerichtet ist, ein Deformieren bzw. ein Verbiegen des Montageteils erreicht wird. Dabei hebt das Montageteil im Überlappungsbereich vom Wandteil ab, wobei das Wandteil weitgehend unverformt ist. Die Verbindungsstelle bleibt dabei dauerhaft bestehen, was zu einem gezielten und kontrollierten Abheben des Montageteils führt.

Gemäß einer weiteren Ausführungsform kann das Montageteil im wesentlichen plattenartig eben ausgebildet sein dergestalt, dass das Montageteil vom Überlappungsbereich ausgehend durch den Montageteil-Überstand in etwa geradlinig verlängert ist. Bei einer derartigen Ausführung des Halteteils sind die beiden Bestandteile des Halteteils, nämlich das Wandteil und das Montageteil, geometrisch einfach ausgebildet. Dadurch können insgesamt die Herstellungskosten des Halteteils gesenkt werden, wobei die Funktionalität des Halteteils auch bei dieser geometrisch einfachen Ausführung insbesondere des Montageteils funktionssicher gewährleistet ist.

In einer bevorzugten Ausführungsform kann das Wandteil im Querschnitt gesehen in etwa L-förmig ausgebildet sein. Dabei bildet der Wandteil-Randbereich einen ersten L-Schenkel und der Wandteil-Befestigungsbereich einen zweiten L-Schenkel aus. Somit ist das Halteteil insgesamt L-förmig ausgeführt, da im montierten Zustand das in etwa plan ausgeführte Montageteil mit dem Montageteil-Randbereich auf dem Wandteil-Randbereich aufliegt und entsprechend mit diesem zur Ausbildung des Überlappungsbereiches an der Verbindungsstelle verbunden ist. Der Montageteil-Überstand steht somit in etwa rechtwinklig vom Wandteil-Befestigungsbereich in Richtung Fahrzeuginnenraum ab.

In einer Weiterbildung kann das Montageteil das Wandteil im Überlappungsbereich wenigstens bereichsweise formschlüssig umgreifen. Damit ist eine funktionssichere Abstützung im Belastungsfall des am Montageteil-Überstandes montierten Funktionsteiles durch die Zugkraft gegeben. Das Deformationsverhalten bei einer im wesentlichen entgegengesetzten Druckkraftbelastung wird durch das formschlüssige Umgreifen des Montageteils am Wandteil nicht beeinflusst.

In einer vorteilhaften konkreten Ausführungsform kann am Montageteil wenigstens eine an den Montageteil-Randbereich anschließende und dem Montageteil-Überstand gegenüberliegende Abstütznase gebildet sein, die das Wandteil wenigstens bereichsweise formschlüssig umgreift. Die wenigstens eine Verbindungsstelle kann dabei im Bereich der wenigstens einen Abstütznase angeordnet sein. Mit der an der Abstütznase angeordneten Verbindungsstelle ist einerseits eine funktionssichere Verbindung zwischen dem Wandteil und dem Montageteil geschaffen, so dass bei einer Zugkraftbelastung eine sichere Abstützung des Montageteils am Wandteil erfolgt. Andererseits ist bei einer Druckkraftbelastung ein einfaches Abheben des Montageteils vom Wandteil im Überlappungsbereich gewährleistet. In Abhängigkeit der geometrischen Ausbildung der Abstütznase kann dieses Abheben bei einer Druckkraftbelastung entsprechend den gewünschten Anforderungen eingestellt werden.

In einer konkreten Ausgestaltung können zwei Abstütznasen am Montageteil ausgebildet sein, die voneinander beabstandet sind und für ein wenigstens bereichsweise formschlüssiges Umgreifen des Wandteils gegenüber dem Montageteil-Randbereich entsprechend abgewinkelt sind. Durch die Ausbildung der zwei Abstütznasen am Montageteil, an denen jeweils eine Verbindungsstelle ausgebildet ist, kann eine funktionssichere Verbindung zwischen dem Montageteil und dem Wandteil hergestellt werden. Zudem ist neben der Abstützung des Montageteils am Wandteil bei einer Zugkraft, die etwa in Fahrzeughochrichtung ausgerichtet ist, auch eine Abstützung für eine Krafteinwirkung, die in etwa in Fahrzeugquerrichtung ausgerichtet ist, zwischen dem Montageteil und dem Wandteil geschaffen. Auch hier wird das Deformationsverhalten durch die am Montageteil ausgebildete Abstütznase bei einer entgegen die Zugkraft in Fahrzeughochrichtung wirkenden Druckkraft nicht beeinflusst.

In einer vorteilhaften Weiterbildung kann mittels der Abwinkelung der beiden Abstütznasen bei der Druckkraftbelastung eine Klappachse ausbildbar sein für ein kontrolliert geführtes Abheben des Montageteils vom Wandteil. Durch die Einstellung der Stegbreite der beiden Abstütznasen im Bereich der Abwinkelung kann die Größe der benötigten Druckkraftbelastung für ein kontrolliert geführtes Abheben des Montageteils vom Wandteil eingestellt werden. Durch die Ausbildung der Klappachse ist zudem funktionssicher gewährleistet, dass das Montageteil bei einer entsprechenden Druckkraftbelastung vom Wandteil abhebt und dadurch in Richtung Fahrzeugaußenseite weggebogen wird. Je nach Ausbildung der geometrischen Form und Größe der Abstütznasen kann das Halteteil so ausgeführt sein, dass die Zugkraftbelastung, bei der das Halteteil unverformt bleibt, größer ist als die Druckkraftbelastung, die notwendig ist für ein Abheben des Montageteils vom Wandteil. Durch die jeweilige Ausführung der Verbindungsstelle im Überlappungsbereich und durch die Stegbreite derselben ist eine Einstellung der jeweiligen Kräfte möglich, bei denen einerseits eine optimale Abstützung und andererseits ein optimales Deformationsverhalten mit entsprechender Abhebung gegeben ist.

Gemäß einer weiteren Ausgestaltung kann am Montageteil und/oder am Wandteil wenigstens eine Versteifungssicke vorgesehen sein. Durch die Versteifungssicke wird die Steifigkeit des Einzelbauteils Montageteil bzw. Wandteil vorteilhaft erhöht, so dass beispielsweise bei einem am Montageteil-Überstand montierten Dachhaltegriff, der bei Benutzung nur einseitig belastet wird, eine Verformung des Montageteils in sich weitgehend vermieden ist.

In einer Weiterbildung kann die wenigstens eine Versteifungssicke am Montageteil so mit der wenigstens einen Versteifungssicke am Wandteil abgestimmt sein, dass die beiden Versteifungssicken im zusammengebauten Zustand des Halteteils fluchtend angeordnet sind. Bei dieser Ausführung wird durch die fluchtend angeordneten Versteifungssicken im Montageteil und im Wandteil die Steifigkeit des gesamten Halteteils vorteilhaft erhöht, so dass dadurch bei einer Belastung des Haltegriffs oder Kleiderhakens am Montageteil-Überstand die Abstützung des Montageteils am Wandteil dadurch erhöht werden kann. Die Versteifungssicken sind dabei so ausgelegt, dass bei einer entgegengesetzten Krafteinwirkung das gewünschte Deformationsverhalten insbesondere des Montageteils weitgehend unbeeinflusst bleibt.

In einer weiteren Ausführungsform kann am Wandteil, vorzugsweise am Wandteil-Befestigungsbereich, wenigstens eine Durchgangsöffnung für ein Befestigungsmittel vorgesehen sein zur Befestigung des Wandteils an der Fahrzeuginnenwand. Durch die im Wandteil-Befestigungsbereich ausgebildete Durchgangsöffnung kann beispielsweise eine Schraube für eine Verschraubung des Wandteils an der Fahrzeuginnenwand hindurch gesteckt werden. Entsprechend kann am Montageteil, vorzugsweise am Montageteil-Überstand wenigstens eine Durchgangsöffnung für ein Befestigungsmittel vorgesehen sein zur Befestigung des Haltegriffs oder Kleiderhakens am Montageteil. Auch hier kann entsprechend beispielsweise mit einer Schraube eine Befestigung des Haltegriffs oder Kleiderhakens durch durchstecken der Schraube durch die am Montageteil-Überstand ausgebildete Durchgangsöffnung erfolgen.

Vorzugsweise ist der Haltegriff am Halteteil dabei als Dachhaltegriff ausgebildet. Unabhängig von der Ausführung des Haltegriffs oder Kleiderhakens ist durch das zweitteilig ausgebildete Halteteil sichergestellt, dass der im montierten Zustand wenigstens etwas in den Fahrzeuginnenraum ragende Haltegriff oder Kleiderhaken bei einer Belastung mit einer Zugkraft funktionssicher aufgrund der Abstützung des Montageteils am Wandteil in seiner Position gehalten ist. Bei einer entgegengesetzten Krafteinwirkung, wie dies beispielsweise im Kollisionsfall durch einen Kontakt eines Fahrzeuginsassen mit dem Haltegriff oder Kleiderhaken auftreten könnte, ist ein optimales Deformationsverhalten des Halteteils sichergestellt, da das Montageteil entsprechend deformieren bzw. nach außen gebogen werden kann und dabei vom Wandteil im Überlappungsbereich abhebt. Durch die im Querschnitt gesehene L-Form des Halteteils ist eine einfache Geometrie der beiden das Halteteil bildenden Einzelbauteile Montageteil und Wandteil geschaffen.

Anhand einer Zeichnung wird ein Ausführungsbeispiel der Erfindung näher erläutert.

### Es zeigen:

- Fig. 1: eine schematische, perspektivische Darstellung eines Halteteils, wobei ein Wandteil und ein Montageteil getrennt gezeichnet sind,
- Fig. 2: eine schematische, perspektivische Darstellung des Halteteils von Fig. 1, wobei das Wandteil und das Montageteil zusammengefügt sind,
- Fig. 3: eine schematische Schnittdarstellung in Fahrzeugquerrichtung durch das Halteteil im montierten Zustand bei einer Zugkraftbelastung, und
- Fig. 4: eine schematische Schnittdarstellung in Fahrzeugquerrichtung durch das Halteteil von Fig. 3 mit einer in etwa der Zugkraft entgegengesetzten Druckkraftbelastung.

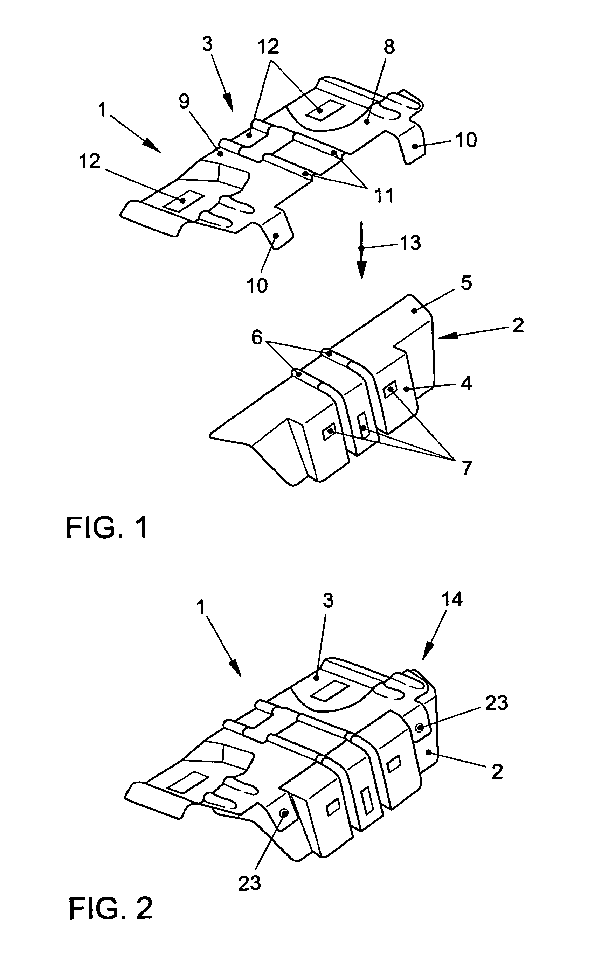

In Fig. 1 und 2 ist schematisch und perspektivisch ein Halteteil 1 dargestellt. Das Halteteil 1 ist zweiteilig aus einem Wandteil 2 und einem Montageteil 3 gebildet, wobei in der Darstellung in Fig. 1 das Wandteil 2 und das Montageteil 3 im nicht zusammengebauten Zustand gezeigt sind.

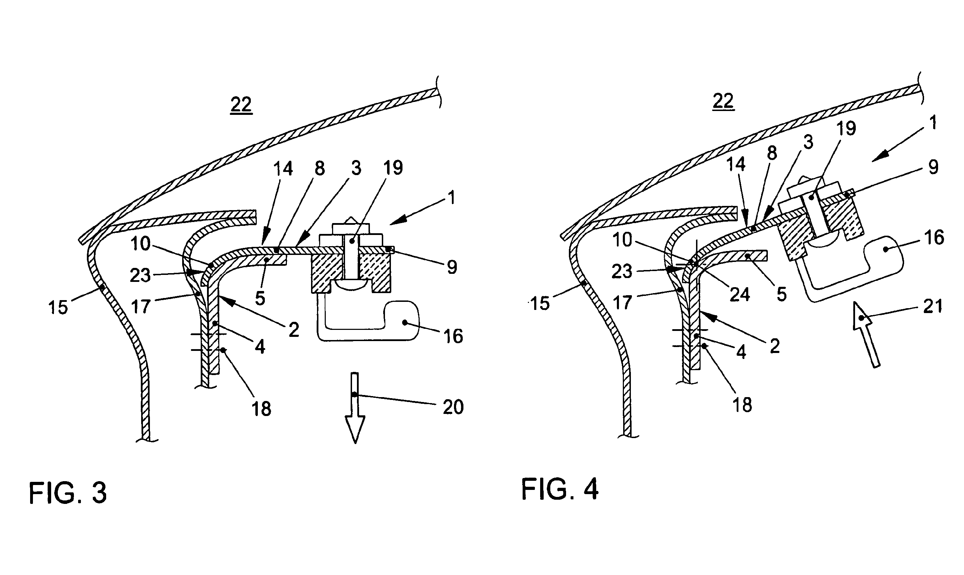

Das Wandteil 2 ist durch einen Wandteil-Befestigungsbereich 4 und einen Wandteil-Randbereich 5 gebildet, wobei der Wandteil-Randbereich 5 gegenüber dem Wandteil-Befestigungsbereich abgewinkelt ist (siehe auch Fig. 3). Zudem sind am Wandteil Versteifungssicken 6 und Durchgangsöffnungen 7 ausgebildet.

Das Montageteil 3 besteht aus einem Montageteil-Randbereich 8, an den sich in etwa geradlinig diesen verlängernd ein Montageteil-Überstand 9 anschließt. An der dem Montageteil-Überstand 9 gegenüberliegenden Seite des Montageteil-Randbereichs 8 sind zwei Abstütznasen 10 am Montageteil 3 ausgebildet, die gegenüber dem Montageteil-Randbereich 8 abgewinkelt sind. Zudem sind auch im Montageteil 3 Versteifungssicken 11 und Durchgangsöffnungen 12 ausgebildet.

Beim Zusammenbauen des Halteteils 1 aus dem Wandteil 2 und dem Montageteil 3 wird das Montageteil 3 in Pfeilrichtung des Pfeils 13 von Fig. 1 auf das Wandteil 2 so aufgelegt, dass der Montageteil-Randbereich 8 mit den Abstütznasen 10 zusammen mit dem Wandteil-Randbereich 5 einen Überlappungsbereich 14 ausbilden. Im zusammengebauten Zustand des Halteteils 1 bildet der Montageteil-Überstand 9 somit eine geradlinige Verlängerung des Überlappungsbereiches 14. Insgesamt gesehen ist das Halteteil 1 im Querschnitt gesehen in etwa L-förmig ausgeführt. Die Versteifungssicken 6 des Wandteils 2 und die Versteifungssicken 11 des Montageteils 3 sind dabei so ausgeführt und aufeinander abgestimmt, dass diese eine insgesamt fluchtende Versteifungssicke ausbilden. Die Abstütznasen 10 umgreifen das Wandteil 2 dabei teilweise für eine Verbesserung der Abstützung des Montageteils 3 gegenüber dem Wandteil 2. Im Überlappungsbereich 14 ist zwischen dem Wandteil-Randbereich 5 und dem Montageteil-Randbereich 8 eine Anlageverbindung geschaffen. Das Montageteil ist an Verbindungsstellen 23 mit dem Wandteildurch schweißen, nieten, kleben oder schrauben zur Herstellung der Verbindungsstellen 23 zwischen dem Montageteil 3 und dem Wandteil 2 verbunden. Die Verbindungsstellen 23 sind jeweils im Bereich der Abstütznasen angeordnet und schematisch in Fig. 2 eingezeichnet.

In den Fig.3 und 4 ist jeweils eine schematische Schnittdarstellung in Fahrzeugquerrichtung durch das Halteteil 1 im montierten Zustand dargestellt. Die Schnittebene ist dabei durch eine Abstütznase 10 gelegt. Das Halteteil ist einerseits mit dem Wandteil-Befestigungsbereich 4 an einer Fahrzeugkarosserie 15 befestigt und andererseits ist am Montageteil-Überstand 9 ein Dachhaltegriff 16 am Halteteil 1 montiert. Der Wandteil-Befestigungsbereich 4 verläuft in etwa parallel zu einer Fahrzeuginnenwand 17 als Bestandteil der Fahrzeugkarosserie 15, so dass der Wandteil-Befestigungsbereich 4 durch die Durchgangsöffnungen 7 hindurch einfach mit der Fahrzeuginnenwand 17 verschraubt werden kann. Diese Verschraubung 18 ist nur schematisch in den Figuren 3 und 4 eingezeichnet. Der Dachhaltegriff 16 ist ebenfalls mit einer Schraube 19 durch die Durchgangsöffnung 12 des Montageteils 3 an diesem angeschraubt.

In Fig. 3 ist mit einem Pfeil 20 die Zugkraft eingezeichnet, die bei einer Benutzung des Dachhaltegriffs 16 auf diesen und somit auf das Halteteil 1 einwirkt. Dabei stützt sich das Montageteil 3 im Überlappungsbereich 14 am Wandteil 2 so ab, dass eine Verformung des Halteteils 1 insgesamt weitgehend ausgeschlossen ist. Durch die Ausbildung der Abstütznasen 10 ist auch eine Abstützung zwischen dem Montageteil 3 gegenüber dem Wandteil 2 bei einer Krafteinwirkung, die in etwa in Fahrzeugquerrichtung ausgerichtet ist, gegeben, wobei im Normalfall die Hauptbelastungsrichtung in Richtung Zugkraft 20 ausgerichtet ist.

Würde beispielsweise bei einer Kollision ein Fahrzeuginsasse den Dachhaltegriff 16 kontaktieren, wie dies in Fig. 4 schematisch durch einen Kraftpfeil 21 eingezeichnet ist, so deformiert das Halteteil 1 in Richtung Fahrzeugaußenseite 22. Durch diese Deformation des Halteteils 1 und der damit verbundenen Verlagerung des Dachhaltegriffes 16 in Richtung Fahrzeugaußenseite 22 kann eine mögliche Verletzung des Fahrzeuginsassen bei einer Kollision durch den Dachhaltegriff 16 vorteilhaft verringert werden. Bei einer derartigen Deformation hebt das Montageteil 3 vom Wandteil 2 wenigstens bereichsweise im Überlappungsbereich 14 ab, wobei die Verbindungsstellen 23 aufrechterhalten bleiben. Aufgrund der abgewinkelten Anordnung der Abstütznasen 10 gegenüber dem Montageteil-Randbereich 8 wird für ein kontrolliert geführtes Abheben des Montageteils eine Klappachse 24 ausgebildet, die bei der in Fig. 4 dargestellten Ansicht senkrecht zur Zeichenebene verläuft. Durch die Anordnung der beiden Abstütznasen 10 in etwa in einer Höhe am Montageteil 3 ist die Ausbildung der Klappachse 24 einfach möglich. Grundsätzlich besteht auch die Möglichkeit, das bei einer Krafteinwirkung in Richtung Kraftpfeil 21 als Druckkraft das Montageteil 3 gegenüber dem Wandteil 2 abgeschert wird. Durch unterschiedliche Auslegungen der Verbindungsstellen bzw. durch unterschiedliche Verbindungstechniken an den Verbindungsstellen kann das Deformationsverhalten in gewünschter Weise eingestellt werden.

Insgesamt ist mit dem Halteteil 1, das zweiteilig aus dem Wandteil 2 und dem Montageteil 3 gebildet ist, ein geometrisch einfaches Bauteil geschaffen, das bezüglich seiner Funktionalität optimal eingesetzt werden kann. Bei Belastung mit der Zugkraft 20 ist eine Abstützung zwischen dem Montageteil 3 und dem Wandteil 2 für ein Nicht-Verformen des Halteteils 3 gegeben. Bei einer Druckkraft in Richtung des Kraftpfeils 21 ist eine optimale Deformation des Halteteils 1, insbesondere des Montageteils 3 unter Abhebung des Montageteils 3 vom Wandteil 2 im Überlappungsbereich 14 gegeben.

### BEZUGSZEICHENLISTE

- 1: Halteteil
- 2: Wandteil
- 3: Montageteil
- 4: Wandteil-Befestigungsbereich
- 5: Wandteil-Randbereich
- 6: Versteifungssicke
- 7: Durchgangsöffnung
- 8: Montageteil-Randbereich
- 9: Montageteil-Überstand
- 10: Abstütznase
- 11: Versteifungssicke
- 12: Durchgangsöffnung
- 13: Pfeil
- 14: Überlappungsbereich
- 15: Fahrzeugkarosserie
- 16: Dachhaltegriff
- 17: Fahrzeuginnenwand
- 18: Verschraubung
- 19: Schraube
- 20: Zugkraft
- 21: Kraftpfeil
- 22: Fahrzeugaußenseite
- 23: Verbindungsstelle
- 24: Klappachse

## Patentansprüche

1. Halteteil für ein Fahrzeug, insbesondere für ein Kraftfahrzeug,
das wenigstens zweiteilig aus wenigstens einem Wandteil (2) und wenigstens einem Montageteil (3) gebildet ist, wobei
das Montageteil (3) mit einem Montageteil-Randbereich (8) in einer Anlageverbindung an einem Wandteil-Randbereich des Wandteils (2) anliegt zur wenigstens bereichsweisen Ausbildung eines Überlappungsbereichs (14),
das Wandteil (2) im montierten Zustand mit einem Wandteil-Befestigungsbereich (4) unmittetbar oder mittelbar an einer Fahrzeuginnenwand befestigt ist, und
am Montageteil (3) wenigstens ein Haltegriff oder kleiderhaken (16) montiert ist, der mit einer Zugkraft belastbar ist,
am Montageteil (3) ein sich an den Montageteil-Randbereich (8) anschließender Montageteil-Überstand (9), an dem der Haltegriff oder kleiderhaken (16) montiert ist, ausgebildet ist,
das Montageteil (3) und das Wandteil (2) im Überlappungsbereich (14) an wenigstens einer Verbindungsstelle (23) miteinander verbunden sind dergestalt, dass bei einer Zugkraftbelastung (20) am Haltegriff oder kleiderhaken (16) eine Abstützung des Montageteils (3) am Wandteil (2) im Überlappungsbereich (14) erfolgt, und
das Montageteil (3) bei einer der Zugkraftbelastung (20) in etwa entgegengesetzt ausgerichteten Druckkraftbelastung (21) unter Beibehaltung der Verbindung an der wenigstens einen Verbindungsstelle (23) vom Wandteil (2) im Überlappungsbereich (14) abhebt, **dadurch gekennzeichnet,**
**dass** die Verbindungsstelle (23) durch Schweißen, Nieten, Kleben oder Schrauben hergestellt ist, und das Montageteil (3) bei der Druckkraftbelastung (21) unter Deformation vom Wandteil (2) abhebt.

2. Halteteil nach Anspruch 1, **dadurch gekennzeichnet, dass** das Montageteil (3) im wesentlichen plattenartig eben ausgebildet ist dergestalt, dass das Montageteil (3) vom Überlappungsbereich (14) ausgehend durch den Montageteil-Überstand (9) in etwa geradlinig verlängert ist.

3. Halteteil nach Anspruch 2, **dadurch gekennzeichnet, dass** das Wandteil (2) im Querschnitt gesehen in etwa L-förmig ausgebildet ist dergestalt, dass der Wandteil-Haltergriff oder kleiderhaken Randbereich (5) einen ersten L-Schenkel und der Wandteil-Befestigungsbereich (4) einen zweiten L-Schenkel ausbildet.

4. Halteteil nach einem der Ansprüche 1 bis 3, **dadurch gekennzeichnet, dass** das Montageteil (3) das Wandteil (2) im Überlappungsbereich (14) wenigstens bereichsweise formschlüssig umgreift.

5. Halteteil nach Anspruch 4, **dadurch gekennzeichnet, dass** am Montageteil (3) wenigstens eine an den Montageteil-Randbereich (8) anschließende und dem Montageteil-Überstand (9) gegenüberliegende Abstütznase (10) gebildet ist, die das Wandteil (2) wenigstens bereichsweise formschlüssig umgreift, und dass die wenigstens eine Verbindungsstelle (23) im Bereich der wenigstens einen Abstütznase (10) angeordnet ist.

6. Halteteil nach Anspruch 5, **dadurch gekennzeichnet, dass** zwei Abstütznasen (10) am Montageteil (3) ausgebildet sind, die voneinander beabstandet sind und für ein wenigstens bereichsweises formschlüssiges Umgreifen des Wandteils (2) gegenüber dem Montageteil-Randbereich (8) entsprechend abgewinkelt sind.

7. Halteteil nach Anspruch 6, **dadurch gekennzeichnet, dass** mittels der Abwinklung der beiden Abstütznasen (10) bei der Druckkraftbelastung (21) eine Klappachse (24) ausbildbar ist für ein kontrolliert geführtes Abheben des Montageteils (3) vom Wandteil (2).

8. Halteteil nach einem der Ansprüche 1 bis 7, **dadurch gekennzeichnet, dass** am Montageteil (3) und/oder am Wandteil (2) wenigstens eine Versteifungssicke (6; 11) vorgesehen ist.

9. Halteteil nach Anspruch 8, **dadurch gekennzeichnet, dass** die wenigstens eine Versteifungssicke (11) am Montageteil (3) so mit der wenigstens einen Versteifungssicke (6) am Wandteil (2) abgestimmt ist, dass die beiden Versteifungssicken (6; 11) im zusammengebauten Zustand des Halteteils (1) fluchtend angeordnet sind.

10. Halteteil nach einem der Ansprüche 1 bis 9, **dadurch gekennzeichnet, dass** am Wandteil (2), vorzugsweise am Wandteil-Befestigungsbereich (4), wenigstens eine Durchgangsöffnung (7) für ein Befestigungsmittel (18) vorgesehen ist zur Befestigung des Wandteils (2) an der Fahrzeuginnenwand (17).

11. Halteteil nach einem der Ansprüche 1 bis 10, **dadurch gekennzeichnet, dass** am Montageteil (3), vorzugsweise am Montageteil-Überstand (9), wenigstens eine Durchgangsöffnung (12) für ein Befestigungsmittel (19) vorgesehen ist zur Befestigung des Funktionsteils (16) am Montageteil (3).

## Claims

1. Holding part for a vehicle, in particular for a motor vehicle,
which is formed at least in two parts from at least one wall part (2) and at least one mounting part (3), wherein
the mounting part (3) bears with a mounting-part edge region (8) against a wall-part edge region of the wall part (2) in a bearing connection in order to form an overlapping region (14) at least in regions,
the wall part (2), in the mounted state, is fastened by a wall-part fastening region (4) directly or indirectly to a vehicle inner wall, and
at least one grab handle or clothes hook (16), which can be loaded with a tensile force, is mounted on the mounting part (3),
a mounting-part excess length (9) which adjoins the mounting-part edge region (8) and on which the grab handle or clothes hook (16) is mounted is formed on the mounting part (3),
the mounting part (3) and the wall part (2) are connected to each other in the overlapping region (14) at at least one connecting point (23) in such a manner that, in the event of a tensile force loading (20) from the grab handle or clothes hook (16), the mounting part (3) is supported on the wall part (2) in the overlapping region (14), and,
in the event of a compressive force loading (21) oriented approximately in the opposite direction to the tensile force loading (20), the mounting part (3) lifts off from the wall part (2) in the overlapping region (14) with the connection at the at least one connecting point (23) being maintained,
**characterized**
**in that** the connecting point (23) is produced by welding, riveting, adhesive bonding or screwing, and the mounting part (3) lifts off from the wall part (2) under deformation in the event of the compressive force loading (21).

2. Holding part according to Claim 1, **characterized in that** the mounting part (3) is of a flat design substantially in the manner of a plate such that the mounting part (3) is extended approximately rectilinearly from the overlapping region (14) by the mounting-part excess length (9).

3. Holding part according to Claim 2, **characterized in that** the wall part (2) is of approximately L-shaped design, as seen in cross section, in such a manner that the wall-part edge region (5) forms a first L limb and the wall-part fastening region (4) forms a second L limb.

4. Holding part according to one of Claims 1 to 3, **characterized in that** the mounting part (3) engages in a form-fitting manner at least in regions around the wall part (2) in the overlapping region (14).

5. Holding part according to Claim 4, **characterized in that** at least one supporting lug (10) which adjoins the mounting-part edge region (8) and is opposite the mounting-part excess length (9) is formed on the mounting part (3) and engages in a form-fitting manner at least in regions around the wall part (2), and **in that** the at least one connecting point (23) is arranged in the region of the at least one supporting lug (10).

6. Holding part according to Claim 5, **characterized in that** two supporting lugs (10) are formed on the mounting part (3), said supporting lugs being spaced apart from each other and being correspondingly angled in relation to the mounting-part edge region (8) for engaging in a form-fitting manner at least in regions around the wall part (2).

7. Holding part according to Claim 6, **characterized in that** a hinge axis (24) for lifting of the mounting part (3) of the wall part (2) in a controlled manner can be formed by means of the angled portion of the two supporting lugs (10) in the event of the compressive force loading (21).

8. Holding part according to one of Claims 1 to 7, **characterized in that** at least one reinforcing bead (6; 11) is provided on the mounting part (3) and/or on the wall part (2).

9. Holding part according to Claim 8, **characterized in that** the at least one reinforcing bead (11) on the mounting part (3) is co-ordinated with the at least one reinforcing bead (6) on the wall part (2) in such a manner that the two reinforcing beads (6; 11) are aligned in the assembled state of the holding part (1).

10. Holding part according to one of Claims 1 to 9, **characterized in that** at least one passage opening (7) for a fastening means (18) for fastening the wall part (2) to the inner wall (17) of the vehicle is provided on the wall part (2), preferably on the wall-part fastening region (4).

11. Holding part according to one of Claims 1 to 10, **characterized in that** at least one passage opening (12) for a fastening means (19) for fastening the functional part (16) to the mounting part (3) is provided on the mounting part (3), preferably on the mounting-part excess length (9).

## Revendications

1. Élément de maintien pour un véhicule, en particulier pour un véhicule automobile, qui est formé au moins en deux pièces à partir d'au moins une pièce de paroi (2) et d'au moins une pièce de montage (3),
la pièce de montage (3) s'appliquant, par l'intermédiaire d'une zone de bord de la pièce de montage (8), contre une zone de bord de la pièce de paroi (2) dans une liaison d'appui, en vue de la formation au moins par endroits d'une zone de chevauchement (14),
la pièce de paroi (2), dans l'état monté, étant fixée directement ou indirectement à une paroi intérieure de véhicule par l'intermédiaire d'une zone de fixation de la pièce de paroi (4), et
au moins une poignée ou patère (16) étant montée sur la pièce de montage (3), laquelle poignée ou patère pouvant être sollicitée par une force de traction,
une saillie de la pièce de montage (9), qui se raccorde à la zone de bord de la pièce de montage (8) et sur laquelle la poignée ou patère (16) est montée, étant réalisée sur la pièce de montage (3),
la pièce de montage (3) et la pièce de paroi (2) étant reliées l'une à l'autre dans la zone de chevauchement (14) au niveau d'au moins un point de liaison (23), de telle sorte qu'en cas de sollicitation par force de traction (20) sur la poignée ou patère (16), la pièce de montage (3) s'appuie sur la pièce de paroi (2) dans la zone de chevauchement (14), et
la pièce de montage (3), en cas d'une sollicitation par force de pression (21) orientée de manière approximativement opposée à la sollicitation par force de traction (20), se soulevant de la pièce de paroi (2) dans la zone de chevauchement (14) tout en maintenant la liaison au niveau de l'au moins un point de liaison (23), **caractérisé en ce que**
le point de liaison (23) est produit par soudage, rivetage, collage ou vissage, et en cas de sollicitation par force de pression (21), la pièce de montage (3) se soulève de la pièce de paroi (2) par déformation.

2. Élément de maintien selon la revendication 1, **caractérisé en ce que** la pièce de montage (3) est réalisée essentiellement de manière plane sous forme de plaque, de telle sorte que la pièce de montage (3) se prolonge de manière approximativement rectiligne par la saillie de la pièce de montage (9), à partir de la zone de chevauchement (14).

3. Élément de maintien selon la revendication 2, **caractérisé en ce que** la pièce de paroi (2), vue en section transversale, est réalisée approximativement en forme de L, de telle sorte que la zone de bord de la pièce de paroi (5) forme une première branche du L et que la zone de fixation de la pièce de paroi (4) forme une deuxième branche du L.

4. Élément de maintien selon l'une quelconque des revendications 1 à 3, **caractérisé en ce que** la pièce de montage (3) vient en prise par engagement positif au moins par endroits autour de la pièce de paroi (2) dans la zone de chevauchement (14).

5. Élément de maintien selon la revendication 4, **caractérisé en ce qu'**au moins un nez d'appui (10), qui se raccorde à la zone de bord de la pièce de montage (8) et qui est opposé à la saillie de la pièce de montage (9), est formé sur la pièce de montage (3), lequel nez d'appui vient en prise par engagement positif au moins par endroits autour de la pièce de paroi (2), et **en ce que** l'au moins un point de liaison (23) est disposé dans la zone de l'au moins un nez d'appui (10).

6. Élément de maintien selon la revendication 5, **caractérisé en ce que** deux nez d'appui (10) sont réalisés sur la pièce de montage (3), lesquels sont espacés l'un de l'autre et sont coudés de manière correspondante par rapport à la zone de bord de la pièce de montage (8) pour venir en prise par engagement positif au moins par endroits autour de la pièce de paroi (2).

7. Élément de maintien selon la revendication 6, **caractérisé en ce qu'**un axe de rabattement (24) peut être réalisé au moyen du coudage des deux nez d'appui (10) en cas de sollicitation par force de pression (21), en vue d'un soulèvement guidé de manière contrôlée de la pièce de montage (3) par rapport à la pièce de paroi (2).

8. Élément de maintien selon l'une quelconque des revendications 1 à 7, **caractérisé en ce qu'**au moins une moulure de rigidification (6 ; 11) est prévue sur la pièce de montage (3) et/ou sur la pièce de paroi (2).

9. Élément de maintien selon la revendication 8, **caractérisé en ce que** l'au moins une moulure de rigidification (11) sur la pièce de montage (3) est adaptée à l'au moins une moulure de rigidification (6) sur la pièce de paroi (2) de telle sorte que les deux moulures de rigidification (6 ; 11) soient disposées de manière alignée dans l'état assemblé de la élément de maintien (1).

10. Élément de maintien selon l'une quelconque des revendications 1 à 9, **caractérisé en ce qu'**au moins une ouverture traversante (7) pour un moyen de fixation (18) est prévue sur la pièce de paroi (2), de préférence sur la zone de fixation de la pièce de paroi (4), en vue de la fixation de la pièce de paroi (2) à la paroi intérieure du véhicule (17).

11. Élément de maintien selon l'une quelconque des revendications 1 à 10, **caractérisé en ce qu'**au moins une ouverture traversante (12) pour un moyen de fixation (19) est prévue sur la pièce de montage (3), de préférence sur la saillie de la pièce de montage (9), en vue de la fixation de la pièce fonctionnelle (16) sur la pièce de montage (3).
